# FASCICULE DE BREVET EUROPEEN

(11) **EP 0 608 675 B1**
(45) Date de publication et mention de la délivrance du brevet: **13.09.1995**
(21) Numéro de dépôt: 93870016.8
(22) Date de dépôt: 26.01.1993
(51) Int. Cl.: H02K 17/16, H02K 1/28

(54) **Moteur électrique de puissance élevée et à vitesse de rotation élevée**
Elektrischer Motor mit hoher Drehgeschwindigkeit und hoher Leistung
High rotating speed, high power electrical motor

(43) Date de publication de la demande: 03.08.1994
(73) Titulaire: GEC ALSTHOM ACEC ENERGIE S.A., 6030 Charleroi (BE)
(72) Inventeur: Bawin, Pierre, B-6032 Mont/sur/Marchienne (BE); Botte, Roland, B-6180 Courcelles (BE); Edebouw, Jean-Marie, B-6120 Marbaix-La-Tour (BE); Gilon, Dominique, B-1410 Waterloo (BE)
(74) Mandataire: Van Malderen, Michel

(56) Documents cités:
- EP-A- 0 343 313
- WO-A-93/00735
- CH-A- 89 129
- DE-U- 1 933 691
- PATENT ABSTRACTS OF JAPAN vol. 7, no. 27 (E-156)(1172) 3 Février 1983
- PATENT ABSTRACTS OF JAPAN vol. 2, no. 133 (E-78)(8145) 8 Novembre 1978

## Description

### Objet de l'invention

La présente invention concerne un moteur électrique de grande puissance qui est destiné à fonctionner à des vitesses de rotation très élevées. Elle concerne plus particulièrement des perfectionnements apportés au rotor d'un tel moteur électrique, notamment un moteur asynchrone.

### Domaine technique de l'invention

Il existe actuellement un besoin de disposer de moteurs électriques puissants qui peuvent fonctionner à vitesse de rotation élevée, à savoir de l'ordre de 10.000 t/min et plus.

Les améliorations apportées aux semi-conducteurs constituant l'électronique de puissance permettent actuellement de commander des moteurs asynchrones de puissance élevée à fréquence variable et donc de réguler la vitesse de rotation des moteurs asynchrones qui peuvent afficher des puissances de l'ordre de plusieurs mégawatts.

Lancer de grosses machines à des vitesses de rotation de l'ordre de grandeur susmentionné pose toutefois des difficultés d'ordre mécanique, notamment en ce qui concerne la résistance mécanique des parties mobiles de ces machines, en l'occurrence le rotor.

Dans un rotor de construction classique, la seule raideur de l'arbre n'assure pas une rigidité suffisante à l'ensemble du rotor pour lui permettre d'atteindre des vitesses de rotation très élevées sans rencontrer une première vitesse critique de flexion.

Dans la demande de brevet EP-A-0 343 313, est décrit un exemple d'exécution particulièrement favorable d'un moteur électrique de puissance élevé et à vitesse de rotation élevée dont le rotor comprend un arbre sur lequel une masse magnétique de préférence constituée de tôles rotoriques est montée par serrage et est maintenue par deux plateaux rendus solidaires dudit arbre et reliés entre eux par des barres, lesdits plateaux et lesdites barres formant la cage d'écureuil et étant constitués par une matière à résistance mécanique élevée et à résistivité électrique faible.

Par conséquent, dans ce mode d'exécution, les plateaux jouent le rôle d'anneaux de court-circuit de la cage d'écureuil.

Dans ce document, il est décrit que les barres reliant les plateaux sont également rendues solidaires de ceux-ci par serrage. Plus particulièrement, les barres sont logées dans des orifices adéquats pratiqués à la périphérie desdits plateaux et les extrémités de celles-ci sont ensuite dilatés par l'introduction de broches coniques.

Il est également envisageable de fixer rigidement par brasure par exemple les barres de la cage d'écureuil à l'anneau de court-circuit comme cela se fait dans la plupart des machines classiques.

Néanmoins, dans un cas comme dans l'autre, l'assemblage barres-anneaux constitue alors un ensemble particulièrement hyperstatique soumis à des dilatations différentielles génératrices de balourds thermiques.

L'influence de ces balourds devient particulièrement importante dans le cas des machines à grande ou très grande vitesse.

Le document DE-U-1 933 691 décrit un moteur électrique où les barres rotoriques ne s'appuyent pas sur toute la longueur du moteur sur les parois de l'encoche. En outre, l'assemblage des barres aux anneaux de court-circuit se fait par l'intermédiaire d'une connexion flexible.

Le document JP-A-57 183241 décrit un dispositif qui permet d'éviter que les barres ne bougent par rapport aux anneaux de court-circuit, alors que ceux-ci sont des anneaux flottants.

Le document WO-A-93/00735 et le document CH-A-89189 décrivent tous deux des liaisons fixes entre les barres et les anneaux de court-circuit.

Le document JP-A-53 100 412 décrit l'utilisation de barres longitudinales fendues sur toute leur longueur dans le but d'empêcher tout mouvement de celles-ci dans l'encoche des anneaux de court-circuit et dans le but de favoriser un bon contact pour le refroidissement.

### Buts de la présente invention

La présente invention vise à proposer un moteur électrique de puissance élevée et à vitesse de rotation élevée qui ne présente pas les inconvénients de l'art antérieur.

En particulier, la présente invention vise à proposer un moteur électrique tel que décrit dans le document EP-A-0 343 313 dont les effets dûs aux balourds thermiques sont atténués en permettant la libre dilatation des barres constituant la cage d'écureuil, ceci indépendamment les unes des autres.

### Principaux éléments caractéristiques

La présente invention concerne un moteur électrique de puissance élevée et à vitesse de rotation élevée constitué d'un stator et d'un rotor. Le rotor comprend un arbre sur lequel est montée par serrage à l'aide de deux plateaux solidaires de l'arbre, une masse magnétique constituée de préférence d'un empilement de tôles rotoriques, et une cage d'écureuil constituée par une pluralité de barres longitudinales reliées entre elles par des plateaux faisant fonction d'anneaux de court-circuit.

Selon une première caractéristique de la présente invention, les barres de la cage d'écureuil sont fixées au rotor en un seul point et de préférence en son milieu. La fixation peut s'effectuer par tous moyens connus en soi, par exemple à l'aide d'une vis, d'une goupille ou par soudure, etc...

Selon une seconde caractéristique de la présente invention, les extrémités des barres sont librement disposées dans des orifices ou alésages pratiqués à la périphérie desdits anneaux de court-circuit. Ces orifices présentent une dimension légèrement supérieure au diamètre externe de l'extrémité de la barre de la cage d'écureuil qui va s'y loger, de manière à ce qu'il subsiste un léger jeu lorsque le rotor est à l'arrêt.

Ce jeu de tolérance doit être réalisé de manière à permettre la libre dilatation de la barre dans l'alésage de l'anneau tout en assurant un contact suffisant pour permettre le passage du courant. En effet, afin d'assurer la rotation du moteur, il convient d'avoir un excellent contact électrique entre la barre et l'anneau et ceci en particulier lorsque le courant est important.

Il convient de noter qu'habituellement les moteurs sont contrôlés par un variateur de fréquence, ce qui signifie qu'au démarrage du moteur un faible courant suffit.

Dans ce cas, une légère pression de la barre dans l'alésage pratiqué dans l'anneau suffit à permettre le passage du courant nécessaire au lancement du moteur.

Lorsque le moteur accroît sa vitesse, la force centrifuge devenant de plus en plus importante, elle déforme la barre qui va s'appuyer sur la face interne de l'alésage correspondant dans l'anneau, assurant ainsi un contact plus important.

Selon une forme d'exécution préférée de la présente invention, les extrémités de la barre sont creusées et fendues sur une distance qui correspond à l'épaisseur axiale de l'anneau de court-circuit. De cette manière, sous l'action de la force centrifuge, les lèvres de l'extrémité de la barre s'écartent avantageusement et exercent de cette manière une pression de plus en plus importante sur la face interne de l'alésage correspondant dans l'anneau de court-circuit, assurant ainsi un excellent contact entre la barre et l'anneau.

En outre, on a prévu un recouvrement par galvanostégie des extrémités des barres afin d'améliorer le glissement de ladite extrémité de la barre dans l'alésage correspondant

Selon une forme d'exécution encore préférée de la présente invention, la face interne de la barre est filetée de manière à y disposer les balourds d'équilibrage.

### Brève description des figures

La présente invention sera décrite plus en détail en se référant aux figures annexées qui représentent schématiquement une forme d'exécution préférée.
- La figure 1 représente une vue en coupe longitudinale du rotor d'un moteur électrique de puissance élevée et à vitesse de rotation élevée selon la présente invention.
- La figure 2 représente une vue en coupe longitudinale d'une barre selon la présente invention.
- Les figures 3a et 3b représentent des vues en coupe transversale de barres selon deux modes d'exécution de la présente invention.

On utilise les mêmes repères numériques dans les différentes figures pour représenter des éléments identiques ou similaires.

### Description détaillée d'une forme préférée de la présente invention

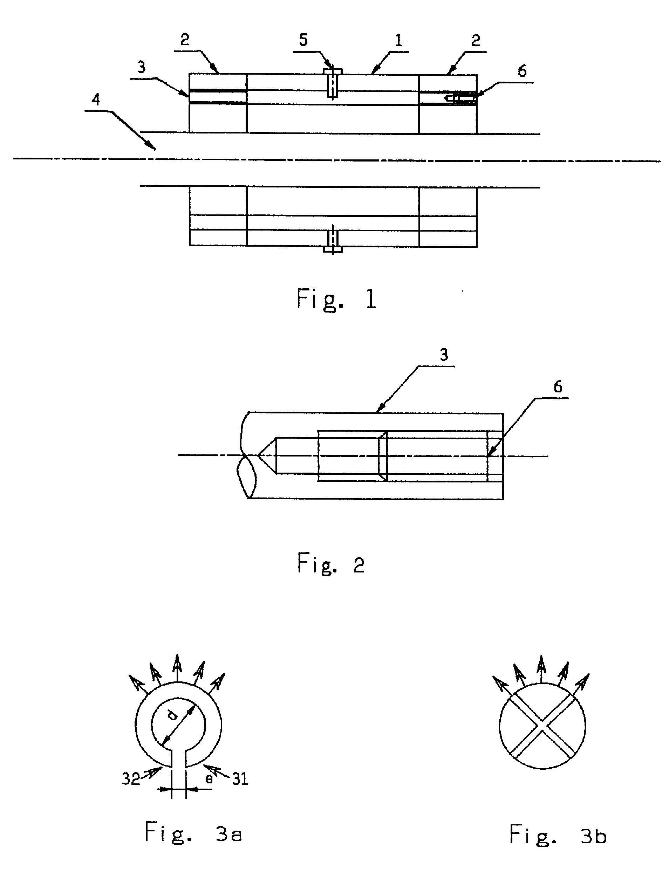

A la figure 1, on a représenté uniquement le rotor d'un moteur selon la présente invention en faisant abstraction du stator.

Le rotor comporte un arbre 4 supporté de part et d'autre par des paliers magnétiques (non représentés) et une masse magnétique 1 constituée de tôles rotoriques supportées par ledit arbre, les tôles rotoriques étant maintenues par serrage sur celui-ci.

Les tôles rotoriques sont serrées l'une contre l'autre par deux plateaux 2 disposés à chaque extrémité de la masse magnétique 1 et frettés sur l'arbre 4.

Ces plateaux 2 sont réunis entre eux par des barres 3 afin de former la cage d'écureuil du rotor et par conséquent ces plateaux font office d'anneaux de court-circuit tout en assurant une liaison mécanique rigide entre l'arbre 4 et les barres 3 de la cage d'écureuil de manière à augmenter la raideur de l'ensemble du rotor.

Avantageusement, les barres 3 et les plateaux 2 sont constitués en cuivre allié présentant une résistance mécanique élevée et une résistivité électrique faible.

Selon la présente invention, les barres sont fixées en un seul point et de préférence en leur milieu à la masse magnétique 1 à l'aide d'un moyen de fixation 5. Ce moyen de fixation peut être tout moyen connu en soi, par exemple une vis, une goupille ou la fixation peut s'effectuer par soudure.

Selon la présente invention, les extrémités des barres 3 sont librement disposées dans des orifices ou alésages pratiqués à la périphérie des plateaux 2 faisant fonction d'anneaux de court-circuit. Avantageusement, ces orifices présentent une dimension intérieure légèrement supérieure au diamètre extérieur de l'extrémité de la barre 3 qui va s'y loger. De cette manière, il subsiste un jeu de tolérance qui permet la libre dilatation de la barre dans l'alésage de l'anneau 2 mais ce jeu doit être néanmoins suffisamment faible de manière à assurer un contact suffisant permettant le passage du courant.

Avantageusement, les extrémités des barres 3 présentent un revêtement obtenu par galvanostégie qui leur assure un contact glissant dans l'orifice de l'anneau de court-circuit 2.

Selon une forme d'exécution préférée représentée aux figures 2 et 3a, les extrémités des barres sont creusées et fendues sur une distance qui correspond essentiellement à l'épaisseur axiale de l'anneau 2 de court-circuit. D'autre part, le fait que les extrémités des barres soient fendues une ou plusieurs fois ainsi que représenté aux figures 3a et 3b, permet sous l'action de la force centrifuge que les lèvres 31 et 32 de la barre 3 s'écartent et exercent de cette manière une pression de plus en plus importante avec la vitesse de rotation sur la face interne de l'alésage assurant un contact électrique tout en permettant un glissement sous l'action de la dilatation.

Selon cette forme d'exécution préférée décrite précédemment, la libre dilatation des barres constituant la cage d'écureuil peut s'effectuer indépendamment les unes des autres et permet de diminuer de cette manière les effets dus aux balourds thermiques.

En outre, ainsi que cela apparaît à la figure 2, les extrémités creuses des barres 3 sont avantageusement filetées de manière à y introduire les balourds d'équilibrage 6.

## Revendications

1. Moteur électrique de puissance élevée et à vitesse de rotation élevée constitué d'un stator et d'un rotor, le rotor comprenant un arbre (4) sur lequel est monté par serrage à l'aide de deux plateaux (2) solidaires de l'arbre, une masse magnétique (1) constituée de préférence d'un empilement de tôles rotoriques et une cage d'écureuil constituée par une pluralité de barres (3) longitudinales reliées entre elles par les plateaux (2) faisant fonction d'anneaux de court-circuit, le moteur étant caractérisé
- en ce que les barres (3) de la cage d'écureuil sont fixées au rotor en un seul point, et
- en ce que les extrémités des barres (3) sont librement disposées dans des orifices ou alésages adéquats pratiqués à la périphérie desdits anneaux (2) de court-circuit ou plateaux (2).

2. Moteur électrique selon la revendication 1 caractérisé en ce que les barres (3) de la cage d'écureuil sont fixées au rotor en son milieu.

3. Moteur électrique selon la revendication 1 ou 2 caractérisé en ce que la fixation des barres (3) au rotor s'effectue à l'aide d'une vis (5), d'une goupille ou par soudure.

4. Moteur électrique selon l'une quelconque des revendications précédentes caractérisé en ce que les orifices ou alésages pratiqués à la périphérie des anneaux (2) de court-circuit présentent une dimension légèrement supérieure au diamètre externe des extrémités des barres (3) de la cage d'écureuil qui vont s'y loger de manière à ce qu'il subsiste un léger jeu.

5. Moteur électrique selon la revendication 4 caractérisé en ce que le jeu est réalisé de manière à permettre la libre dilatation de la barre (3) dans l'alésage tout en assurant un contact suffisant pour permettre le passage du courant.

6. Moteur électrique selon l'une quelconque des revendications précédentes caractérisé en ce que les extrémités des barres (3) sont creusées et fendues sur une distance qui correspond à l'épaisseur axiale de l'anneau (2) de court-circuit.

7. Moteur électrique selon l'une quelconque des revendications précédentes caractérisé en ce que les extrémités des barres (3) présentent un recouvrement par galvanostégie.

8. Moteur électrique selon l'une quelconque des revendications précédentes caractérisé en ce que la face interne des extrémités des barres (3) est filetée de manière à recevoir un balourd d'équilibrage (6).

## Patentansprüche

1. Elektromotor mit hoher Leistung und hoher Drehzahl, der aus einem Stator und einem Rotor besteht, wobei der Rotor eine Welle (4) aufweist, auf der durch Festklemmen mit Hilfe von zwei mit der Welle fest verbundenen Platten eine magnetische Masse (1) angebracht ist, die vorzugsweise gebildet ist aus einem Stapel Rotorblechen und einer Käfigwicklung, die aus einer Vielzahl von Längsstangen (3) besteht, die durch die als Kurzschlußringe dienenden Platten miteinander verbunden sind, wobei der Motor dadurch gekennzeichnet ist,
- daß die Stangen (3) der Käfigwicklung an einem einzigen Punkt an den Rotor befestigt sind, und
- daß die Enden der Stangen (3) in geeigneten Öffnungen oder Bohrungen, die an dem Rand der Kurzschlußringe (2) oder Platten (2) angebracht sind, frei angeordnet sind.

2. Elektromotor gemäß Anspruch 1, dadurch gekennzeichnet, daß die Stangen (3) der Käfigwicklung in der Mitte des Rotors an dem Rotor befestigt sind.

3. Elektromotor gemäß Anspruch 1 oder 2, dadurch gekennzeichnet, daß die Befestigung der Stangen (3) an dem Rotor mit Hilfe einer Schraube (5) oder eines Stiftes, oder durch Schweißen erfolgt.

4. Elektromotor gemäß irgendeinem der vorhergehenden Ansprüche, dadurch gekennzeichnet, daß die an dem Rand der Kurzschlußringe (2) angebrachten Öffnungen oder Bohrungen eine ein wenig größere Abmessung als der äußere Durchmesser der darin einzuschiebenden Enden der Stangen (3) der Käfigwicklung aufweisen, so daß ein geringes Spiel verbleibt.

5. Elektromotor gemäß Anspruch 4, dadurch gekennzeichnet, daß das Spiel so verwirklicht wird, daß die freie Ausdehnung der Stange (3) in der Bohrung möglich ist, während zugleich ein genügender Kontakt sichergestellt wird, um das Fließen des Stroms zu ermöglichen.

6. Elektromotor gemäß irgendeinem der vorhergehenden Ansprüche, dadurch gekennzeichnet, daß die Enden der Stangen (3) über eine Strecke, die der axialen Dicke des Kurzschlußrings (2) entspricht, hohl und geschlitzt sind.

7. Elektromotor gemäß irgendeinem der vorhergehenden Ansprüche, dadurch gekennzeichnet, daß die Enden der Stangen (3) einen durch Galvanostegie aufgebrachten Überzug aufweisen.

8. Elektromotor gemäß irgendeinem der vorhergehenden Ansprüche, dadurch gekennzeichnet, daß die innere Fläche der Enden der Stangen (3) mit einem Gewinde versehen ist, damit sie eine Auswuchtmasse (6) aufnehmen können.

## Claims

1. An electric motor with high power and high rotational speed consisting of a stator and of a rotor, the rotor comprising a shaft on which is mounted by clamping, with the aid of two plates secured to the shaft, a magnetic mass, preferably consisting of a stack of armature core disk laminations, and a squirrel cage consisting of a plurality of longitudinal bars joined together by plates acting as short circuiting rings, the motor being one
- wherein the bars of the squirrel cage are fixed to the rotor at a single point, and
- wherein the ends of the bars are freely located in suitable orifices or bores made in the periphery of said short circuiting rings or plates.

2. The electric motor as claimed in claim 1, wherein the bars of the squirrel cage are fixed to the rotor at its middle.

3. The electric motor as claimed in claim 1 or 2, wherein the bars are fixed to the rotor with the aid of a screw, a pin or by welding.

4. The electric motor as claimed in any one of the preceding claims, wherein the orifices or bores made in the periphery of the short circuiting rings have a dimension slightly greater than the external diameter of the ends of bars of the squirrel cage which will be housed therein so that a slight clearance remains.

5. The electric motor as claimed in claim 4, wherein the clearance is produced so as to allow the bar to expand freely in the bore while ensuring sufficient contact to allow the current to pass.

6. The electric motor as claimed in any one of the preceding claims, wherein the ends of the bars are hollowed out and slit over a distance which corresponds to the axial thickness of the short circuiting ring.

7. The electric motor as claimed in any one of the preceding claims, wherein the ends of the bars have a coating by galvanostegy.

8. The electric motor as claimed in any one of the preceding claims, wherein the internal face of the ends of the bars is screw-threaded so as to receive a balancing weight.
